# EUROPEAN PATENT SPECIFICATION

(11) **EP 3 146 672 B1**
(45) Date of publication and mention of the grant of the patent: **18.09.2019**
(21) Application number: 14725710.9
(22) Date of filing: 23.05.2014
(51) Int. Cl.: H04L 12/24, H04L 12/26, H04L 12/14

(54) **EVENT REPORTING IN A SERVICE FUNCTION CHAIN**
EREIGNISMELDUNG IN EINER DIENSTKETTENFUNKTION
RAPPORT D'ÉVÉNEMENTS DANS UNE CHAÎNE DE FONCTIONS DE SERVICE

(43) Date of publication of application: 29.03.2017
(73) Proprietor: Nokia Solutions and Networks Oy, 02610 Espoo (FI)
(72) Inventor: RASANEN, Juha Antero, FI-02660 Espoo (FI)
(74) Representative: Nokia EPO representatives
(86) International application number: PCT/EP2014/060623
(87) International publication number: WO 2015/176765

(56) References cited:
- US-A1- 2011 158 237
- QUINN P ET AL: "Service Function Chaining (SFC) Architecture; draft-quinn-sfc-arch-05.txt", SERVICE FUNCTION CHAINING (SFC) ARCHITECTURE; DRAFT-QUINN-SFC-ARCH-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 5 May 2014 (2014-05-05), pages 1-31, XP015098997, [retrieved on 2014-05-05]
- RIJSMAN J MOISAND JUNIPER NETWORKS B: "Metadata Considerations; draft-rijsman-sfc-metadata-considerations- 00.txt", METADATA CONSIDERATIONS; DRAFT-RIJSMAN-SFC-METADATA-CONSIDERATIONS- 00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 February 2014 (2014-02-13), pages 1-30, XP015096689, [retrieved on 2014-02-13]
- QUINN R FERNANDO J GUICHARD S KUMAR CISCO SYSTEMS P ET AL: "Network Service Header; draft-quinn-nsh-01.txt", NETWORK SERVICE HEADER; DRAFT-QUINN-NSH-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 July 2013 (2013-07-13), pages 1-21, XP015094307, [retrieved on 2013-07-13] cited in the application
- INTEL CORPORATION ET AL: "Data-modelling and Service Chains alignment;NFVMAN(14)000088_Data_modelling_ and_Service_chains", ETSI DRAFT; NFVMAN(14)000088_DATA_MODELLING_AND_SERVIC E_CHAINS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, 6 February 2014 (2014-02-06), pages 1-15, XP014159965, [retrieved on 2014-02-06]
- BOUCADAIR C JACQUENET FRANCE TELECOM R PARKER AFFIRMED NETWORKS D LOPEZ TELEFONICA I+D J GUICHARD C PIGNATARO CISCO SYSTEMS M ET A: "Service Function Chaining: Framework & Architecture; draft-boucadair-sfc-framework-01.txt", SERVICE FUNCTION CHAINING: FRAMEWORK & ARCHITECTURE; DRAFT-BOUCADAIR-SFC-FRAMEWORK-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 12 February 2014 (2014-02-12), pages 1-25, XP015096634, [retrieved on 2014-02-12]

## Description

### Field of the invention

The present invention relates to apparatus, methods and a computer program product related to a service chain. More particularly, the present invention relates to apparatus, methods and a computer program product related to event reporting in a service chain.

### Background of the invention

### Abbreviations

- 3GPP: 3^{rd} Generation Partnership Project
- CDR: Call Detail Record
- DL: Downlink
- DPI: Deep Packet Inspection
- EPC: Extended Packet Core
- ETSI: European Telecommunications Standards Institute
- FMSS: Flexible Mobile Service Steering
- FW: Firewall
- GS: Group Specification
- GW: Gateway
- IETF: Internet Engineering Task Force
- IP: Internet Protocol
- ISG: Industry Specification Group
- NAT: Network Address Translation
- NFV: Network Function Virtualization
- OCS: Online Charging System
- OFCS: Offline Charging System
- OSS: Operations support system
- P-GW: Packet Data Network Gateway
- PCRF: Policy and Charging Rules Function
- SA: System Architecture
- SDF: Service Data Flow
- SF: Service (chain) Function
- TSG: Technical Specifications Group
- UE: User Equipment
- UL: Uplink
- WG: Working Group

3GPP has started working on service chaining with a new work item Flexible Mobile Service Steering (FMSS), refer e.g. to the meeting report of the 3GPP TSG-SA1#65.

Service chaining is also under work within IETF. So far IETF has created a draft problem statement (IETF draft-quinn-sfc-problem-statement-02.txt) and a draft proposal on how to transfer service chaining related control information within network packets or frames (IETF draft-quinn-nsh-01.txt).

Service chaining is also under work within ETSI ISG NFV, refer e.g. to the draft ETSI GS NFV-MAN 001 (Network Function Virtualization (NFV) Management and Orchestration).

For example in a 3GPP environment, one (or more) gateway in a service chain performs usage monitoring and/or counting of (uplink and/or downlink) data for charging purposes and/or charging or policy control purposes and reports the results of the counting for further handling / use to other network entities like e.g. PCRF, OCS or OFCS.

3GPP will be discussing the requirements for service chain status information. It is suggested that status information, e.g. the availability of the service chain, should be dynamically updatable and available for the 3GPP network (refer to the 3GPP document S1-141050 bound for the SA1#66 meeting on 12-16 May 2014).

Hereinafter, some definitions of terms used in the present description are given:
**Service Function:** A function (e.g. Network Address Translation (NAT), Firewall (FW), Deep Packet Inspection (DPI)) that monitors and/or modifies the user data flow.
**Service Chain:** Service built from one or several Service Functions executed in a predetermined sequence.
**Network Service:** Service visible to the end user, offered by a network operator and built from a Service Chain.
**Service Classifier:** Function that uses the Classification Criteria to determine and impose the Service Chain for the user data flow or service data flow.
**Classification Criteria:** Information upon which the Service Classifier determines the appropriate Service Chain for the user data flow. The Classification Criteria can depend on, e.g., subscription, network status, and media type.
**Service Chain Identifier:** An identifier that uniquely identifies the data flow of a user belonging to a Service Chain (also named user data flow or service data flow). The Service Chain Identifier is determined by the Service Classifier and evaluated by the frame/packet forwarding function.
**Service Chaining System:** System that implements Service Chaining. It consists of Service Classifiers and Service Functions.
**Service Data Flow:** A packet flow that matches a packet flow filter (e.g. a video flow) or an aggregate set of packet flows that match a set of packet flow filters.

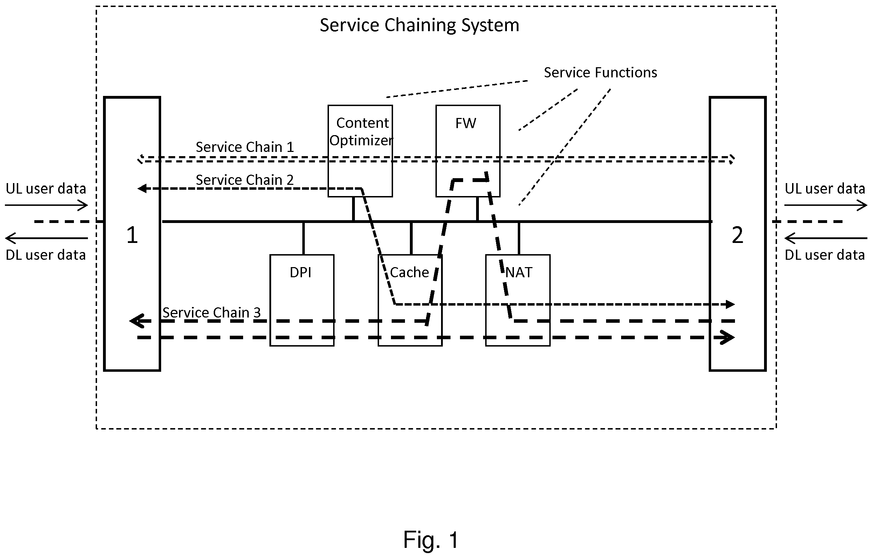

Fig. 1 depicts a typical Network Service built on Service Functions. The Network Service, visible to the user, is a Service Chain.

When UL user data flow leaves the mobile network (or another access network), and enters the Service Chaining System, it passes through a Service Classifier 1, which analyses the user data flow (e.g. some header information) and possibly additional information, and then, based on (uplink) Classification Criteria, allocates the user data flow to a Service Chain (e.g., adds a Service Chain Identifier). Each Service Chain comprises one or several Service Functions. The UL user data flow leaves the Service Chaining System through an endpoint 2 which may be a Service Classifier, too.

When DL user data flow enters the Service Chaining System, it passes through a Service Classifier (which may be the endpoint 2 of the uplink data flow), which analyses the user data flow (e.g. some header information) and possibly additional information, and then, based on (downlink) Classification Criteria, allocates the user data flow to a Service Chain (e.g., adds a Service Chain Identifier). Each Service Chain comprises one or several Service Functions. The DL user data flow leaves the Service Chaining System through an endpoint (which may be the Service Classifier 1 of the uplink path), and enters the mobile network.

In Fig. 1, DPI, Cache, NAT, a content optimizer and FW are shown as examples of Service Functions.

Service Chains for UL and DL user data flows for the same connection can be the same (Service Chains 1 and 2 in Fig. 1) or different from each other (Service Chain 3 in Fig. 1). Namely, in the example of Fig. 1, the downlink Service Chain 3 passes through FW, whereas the uplink Service Chain does not pass through FW.

### References:

- 3GPP TSG-SA1#65 meeting report.
- 3GPP TSG-SA WG1 document S1-141050
- IETF draft-quinn-sfc-problem-statement-02.txt.
- IETF draft-quinn-nsh-01.txt.
- Draft ETSI GS NFV-MAN 001 *Network Function Virtualization (NFV) Management and Orchestration.*

Patent Document US 2011/0158237 A1, published on June 30, 2011, discloses a device which communicates with feature peers.

IETF draft Service Function Chaining (SFC) Architecture, draft-quinn-sfc-arch-05.txt, describes an architecture for the specification, creation and maintenance of Service Function Chains in a network.

### Summary of the invention

It is an object of the present invention to improve the prior art.

The invention is defined in the independent claims as appended. Advantageous aspects are defined in the dependent claims.

According to some embodiments of the invention, at least one of the following advantages may be achieved:
- a service data flow may be correctly charged;
- reports on a service data flow may be correct;
- the number of control interfaces for controlling and reporting service chain status information may be reduced;
- the architecture of a service chain is simplified;
- the number of message exchanges is reduced;
- entities outside the service chain (and optionally of the corresponding control and monitoring systems) are not affected; insofar, the solution is backwards compatible.

### Brief description of the drawings

Further details, features, objects, and advantages are apparent from the following detailed description of the preferred embodiments of the present invention which is to be taken in conjunction with the appended drawings, wherein
Fig. 1 illustrates a examples of traffic steering through a service chain according to the prior art;
Fig. 2 illustrates a service chain configuration with event reporting capabilities according to an embodiment of the invention, wherein the uplink and downlink packet / service classifiers are integrated / collocated;
Fig. 3 illustrates a service chain configuration with event reporting capabilities according to an embodiment of the invention, wherein the uplink and downlink packet / service classifiers are in separate entities and/or are separate functions;
Fig. 4 shows an apparatus according to an embodiment of the invention;
Fig. 5 shows a method according to an embodiment of the invention;
Fig. 6 shows an apparatus according to an embodiment of the invention;
Fig. 7 shows a method according to an embodiment of the invention;
Fig. 8 shows an apparatus according to an embodiment of the invention;
Fig. 9 shows a method according to an embodiment of the invention; and
Fig. 10 shows an apparatus according to an embodiment of the invention.

### Detailed description of certain embodiments

Herein below, certain embodiments of the present invention are described in detail with reference to the accompanying drawings.

Moreover, it is to be understood that the apparatus is configured to perform the corresponding method, although in some cases only the apparatus or only the method are described.

If a chained entity (such as an entity providing a service function (in this description sometimes named a "service function" for simplicity) or a transport entity) residing in the service chain after a monitoring and/or counting entity drops packets for whatever reason (e.g. due to congestion, corruption, buffering time-out, temporary failures, ...), or more generally causes an event that affects or is related to the service data flow (SDF), the end-to-end application layer may notice this and may take corrective actions (e.g. re-sending).

On the other hand, the monitoring and/or counting entity (or, more generally, another relevant entity in the chain) does not notice the event. This means, e.g. for a case that data packets are dropped within the operator's network, that these data packets are nevertheless counted and reported, possibly triggering policy and/or charging control events on false grounds, and/or possibly causing incorrect charging due to incorrect input information into the charging system. More generally, meaningful events may take place but are unnoticed in the chain or a corresponding monitoring system or reporting system.

According to some embodiments of the invention, an event (e.g. dropped packets) is reported by the entity causing the event. Such a report may be sent on the user plane / in-band transport, e.g. as a part / field of an IP packet. A report may be piggy-backed on user data packets. For example, the prior art IETF draft-quinn-nsh-01.txt describes an IP packet based mechanism that can be applied to be used for this purpose. In some embodiments, a report may be sent in a packet dedicated for the purpose (i.e. with no user data in the packet). E.g., a dedicated packet may be sent if there is no user data packet to be sent within a given period of time. This condition may be supervised e.g. by a timer or based on a timestamp in the packet or report.

The next node in the chain may send the packet further, and so on until it arrives at an entity for which the report is relevant. This entity may evaluate the report and act according to the information comprised in the report. For example, if the report reports that a packet was dropped in the service chain, the entity may take care that the dropped packet is not charged.

In some embodiments, it may then remove the report from the packet. If the packet comprises user data in addition to the report, it may forward the user data without the report. In some embodiments, it may forward the packet comprising the user data and the report. In some embodiments, a decision whether or not the report is forwarded may be met, e.g. based on whether or not the report may be relevant for other entities of the service chain, too. If it may be relevant, the report will be forwarded, otherwise not. If the entity forwards the report, it may mark the report as "used". Thus, a subsequent entity knows that a former entity using / needing the particular kind of reports has been on the route of the report.

A packet comprising a report may finally arrive at an entity / function at the end of the chain (an endpoint which may be e.g. a packet / service classifier function or a gateway or router function). According to some embodiments of the invention, this entity may remove the report from the packet. Then, the entity may send the rest of the packet further, except if the packet was dedicated just for the report. In this case, the entity may not send anything further. Thus, entities outside the service chain such as a terminal or entities of the internet are not affected by the report.

In addition, according to some examples, the end entity may send the report in the opposite direction of the service chain, again preferably piggy-backed (if possible) or in a dedicated packet. I.e., the report makes a U-turn at the end of the service chain. Thus, the report may potentially reach one or more other entities that were not on its route so far (e.g. because the uplink and downlink parts of the service chain are routed through different service chain functions, or because the other entity is located upstream from the event reporting entity in the flow direction from the event reporting entity to the endpoint). The next node in the chain may use the packet and/or send the packet (with or without the report) further, and so on.

The report may make another U-turn at the other endpoint of the service chain and be forwarded up to the origin entity (event reporting entity) of the report. Entities on this path may use the report and/or send the packet (with or without the report) further. Thus, the report may potentially make a full circle in the chain. Alternatively, the report may be removed earlier, e.g. if it is no more needed.

For example, the report may be removed from circulation in one of the following ways:
- After a full circle, the origin entity of the report removes the report. In order to be able to do that, i.e. to identify the report to be removed, the origin entity may have marked the report, when creating it, with an identity that is unique in the operating environment.
- An end entity (endpoint) of the service chain, e.g. a packet / service classifier entity or a gateway or router entity, may remove the report. For example, the endpoint may remove those reports which are marked as used.
- As described hereinabove, an entity using the particular kind of report may not send the received report anymore further in the service chain.

A corresponding mechanism may be used to solve another potential issue in service chains:
Conventionally, each of the chained entities may be connected to one or more control interfaces to control system(s) and/or monitoring system(s). Thus, there may be a lot of control interfaces and related connections in the service chain, which may cause a complex architecture and a lot of exchanged messages.

According to some examples, report events (e.g. start reporting events, pause reporting events, resume reporting events, stop reporting events etc.) may be circulated along the service chain according to the same principles as outlined hereinabove for events occurring at one of the entities of the chain. The report events may be triggered e.g. by an OSS system. In a 3GPP EPC environment, the report event may be relevant for transporting service chain status information (e.g. as per the requirements set out in 3GPP S1-141050).

In this case, the service chain may comprise less control interfaces and related connections than the number of entities of the service chain. For example, the service chain may comprise only one control interface. From there, a report event triggered by an external system, such as an OSS, is circulated along the service chain such that at least all entities of the service chain for which the report event may be relevant are informed about the report event. Preferably, the report event may be fully circulated along the service chain.

In the present description, reports and report events are sometimes summarized as report information. I.e., a report information may comprise a report, or a report event, or both.

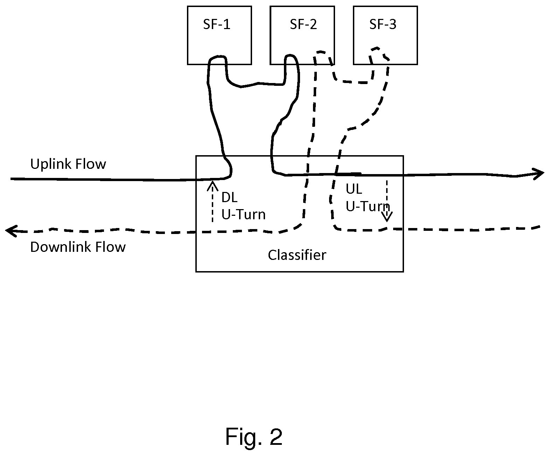

Fig. 2 shows a service chain comprising a packet classifier or service classifier and service functions SF-1 to SF-3 according to an embodiment of the invention. I.e., in this embodiment, the uplink and downlink packet / service classifiers of the service chain are integrated / collocated in the same entity and/or are a single function.

Also shown are uplink service data flow (continuous line) and downlink service data flow (dashed line) of a service data flow. In this embodiment, the uplink and downlink data flows use partly different service (chain) functions. The uplink flow is routed via SF-1 and SF-2, whereas the downlink flow is routed via SF-3 and SF-2.

In the packet/service classifier, DL U-turn and UL U-turn are shown which indicate the points where the classifier, which is also the endpoint of the chain, may turn report information back into the chain to make them reach all relevant entities. I.e., report information passing in the uplink data flow may be inserted in the downlink data flow at the UL U-turn, and report information passing in the downlink data flow may be inserted in the uplink data flow at the DL U-turn.

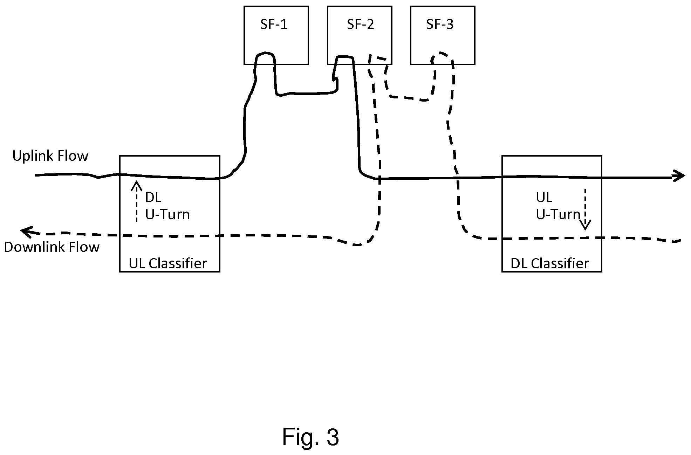

Fig. 3 describes an embodiment corresponding to that of Fig. 2, except that the uplink and downlink packet / service classifiers of the service chain are in separate entities and/or are separate functions. In this embodiment, the uplink and downlink data flows use partly different service (chain) functions. The uplink data flow is routed via SF-1 and SF-2, whereas the downlink data flow is routed via SF-3 and SF-2.

In the DL service classifier, a UL U-turn is shown which indicates the point where the DL service classifier, which is also the endpoint of the uplink part of the service chain, may turn report information back into the downlink part of the service chain to make it reach all relevant entities. I.e., report information passing in the uplink data flow may be inserted in the downlink data flow at the UL U-turn.

In the UL service classifier, a DL U-turn is shown which indicates the point where the UL service classifier, which is also the endpoint of the downlink part of the service chain, may turn report information back into the uplink part of the service chain to make it reach all relevant entities. I.e., report information passing in the downlink data flow may be inserted in the uplink data flow at the DL U-turn in the UL classifier.

Note that the report information of Figs. 2 and 3 may comprise a report on an event generated e.g. in one of the service functions of the service chain (e.g. SF-1 to SF-3), or a report event related to transporting service chain status or control information.

The configurations of Figs. 2 and 3 may be applied to a 3GPP EPC environment. In that case the packet / service classifier may (but does not have to) be integrated in the P-GW.

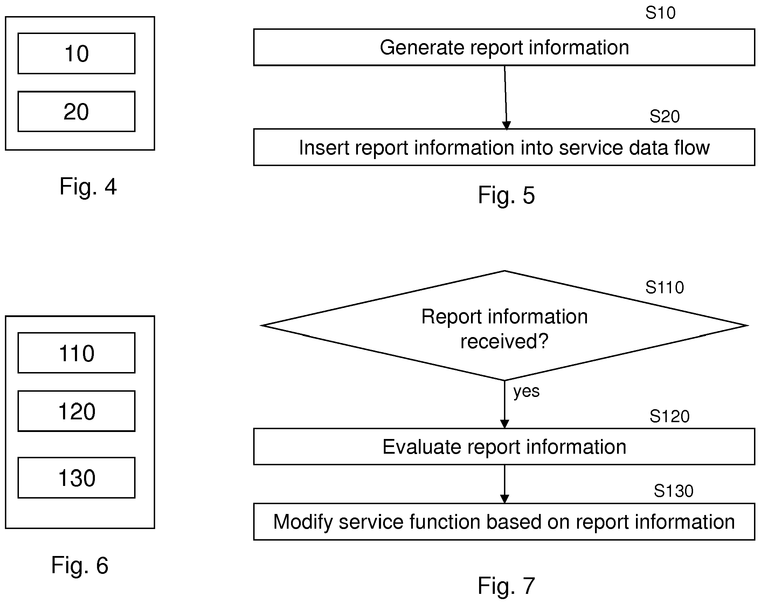

Fig. 4 shows an apparatus according to an embodiment of the invention. The apparatus may be a service function or an element thereof. Fig. 5 shows a method according to an embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises information generating means 10 and inserting means 20.

The information generating means 10 generates report information (S10). In particular, it may generate report information if it is assumed that the report information is relevant to a service chain (S10). The report information may be based on an event occurring in processing a received service data flow of the service chain and/or based on a message received e.g. from an OSS system.

The inserting means 20 inserts the report information into an outbound service data flow to be sent to a subsequent entity in the service chain (S20). The outbound data flow may be based on a received service data flow or may be generated by the apparatus as a dedicated message.

Fig. 6 shows an apparatus according to an embodiment of the invention. The apparatus may be a service function or an element thereof. Fig. 7 shows a method according to an embodiment of the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises monitoring means 110, evaluating means 120, and modifying means 130.

The monitoring means 110 monitors whether a received service data flow comprises a report information relevant to the apparatus (S110). The received service data flow may be received from a precedent entity in service chain. In particular, it may be received from the entity directly preceding the apparatus.

The evaluating means 120 evaluates the report information (S120) if the report information is relevant ("yes" in S110).

The modifying means 130 modifies a service function of the service chain based on the evaluated report information (S130). For example, if the report information indicates that a packet was dropped, and the apparatus is configured to generate CDRs for transmitted packets, the apparatus may not generate a CDR for the dropped packet, or it may generate a CDR indicating that the packet should not be charged.

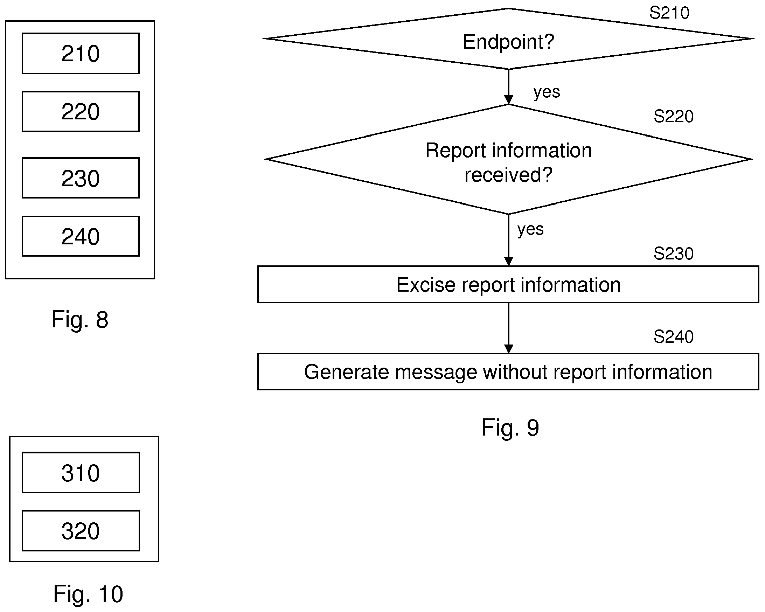

Fig. 8 shows an apparatus according to an embodiment of the invention. The apparatus may be e.g. a gateway, router, or classifier, or an element thereof. Fig. 9 shows a method according to an embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises determining means 210, information monitoring means 220, excising means 230, and generating means 240.

The determining means 210 determines if the apparatus comprises an endpoint of an inbound service chain part of a service chain (S210). The inbound service chain part consists of at least a portion of one of an uplink service chain of the service chain and a downlink service chain of the service chain.

The information monitoring means 220 monitors whether a received service data flow comprises report information (S220). The received service data flow may be received from a precedent entity of the inbound service chain part; in particular, it may be received from the entity directly precedent to the apparatus in the service chain.

The excising means 230 excises the report information out of the received service data flow (S230).

The sequence of S210 and S220 may be interchanged. S210 may be performed parallel to S220. S230 may be performed after S220 but before, parallel to, or after S210. In some embodiments, S230 is performed only if at least one of the apparatus comprises the endpoint and the received service data flow comprises the report information.

If the apparatus comprises the endpoint (S210 = "yes") and if the received service data flow comprises the report information (S220 = "yes"), the generating means generates a message based on the received service data flow from which the report information is excised (S230). The message is intended to be sent to an entity outside of the service chain.

Fig. 10 shows an apparatus according to an embodiment of the invention. The apparatus comprises at least one processor 310, at least one memory 320 including computer program code, and the at least one processor, with the at least one memory and the computer program code, being arranged to cause the apparatus to at least perform at least one of the methods according to Figs. 5, 7, and 9.

An alternative implantation for piggy-backing the report information to that according to IETF draft-quinn-nsh-01.txt is as follows:
The report information is sent to a dedicated node which then sends the report information to the other service functions of the service chain.

Note that piggy-backing the report information is preferred over dedicated messages.

Typically, uplink is considered as a direction from a terminal to a network, whereas downlink is considered as a direction from the network to the terminal. However, in embodiments of the invention, these terms may have a broader meaning, wherein uplink designates a direction from a first entity (via the uplink part of the service chain) to a second entity, and downlink designates a direction from the second entity (via the downlink part of the service chain) to the first entity.

In the above description, it is assumed that the endpoint of one part (the downlink part or the uplink part) of the service chain is the service classifier for the other part (the uplink part and the downlink part, respectively). However, in some embodiments, the endpoint of the one part may be distinct from the service classifier of the other part. In this case, the report information (e.g. the report or the OSS request) may be transferred from the endpoint of the one part to the service classifier of the other part, e.g. in a dedicated message.

Embodiments of the invention may be employed in an EPC network. They may be employed also in other networks such as LTE, LTE-A networks, where a service chain is implemented.

A terminal may be a user equipment such as a mobile phone, a smart phone, a PDA, a laptop, a tablet PC, a desktop PC, or any other device which may be connected to the respective network.

A gateway or router may be a user plane network entity that routes and/or manipulates the user data flows / service data flows in the network, e.g. such as a packet data network gateway (P-GW) or the like.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

According to the above description, it should thus be apparent that exemplary embodiments of the present invention provide, for example a service function or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that exemplary embodiments of the present invention provide, for example a service classifier or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that various modifications may be made without departing from the scope of the invention as defined by the appended claims.

## Claims

1. Apparatus, comprising
information generating means (10) adapted to generate a report information based on a dropping of a packet of a first received service data flow occurring in processing the first received service data flow, wherein the first received service data flow is allocated to a service chain and received from a precedent entity in the service chain; and
flow generating means adapted to generate an outbound service data flow including the report information to be sent to a subsequent entity in the service chain.

2. The apparatus according to claim 1, wherein
the flow generating means is adapted to generate the outbound service data flow based on the first received service data flow and the report information.

3. The apparatus according to claim 2, further comprising
time supervising means adapted to supervise whether the outbound service data flow was generated based on the first received data flow and the report information within a determined time; and
triggering means adapted to trigger the flow generating means to generate the outbound service data flow based on the report information and not based on the first received data flow if the outbound service data flow was not generated based on the first received data flow and the report information within a determined time.

4. The apparatus according to any of claims 1 to 3, further comprising
marking means adapted to mark the report information with an identifier of the apparatus;
checking means adapted to check whether a second received service data flow comprises the report information marked with the identifier, wherein the second received service data flow is received from the precedent entity in the service chain;
removing means adapted to remove the report information from the second received service data flow if the second received service data flow comprises the report information marked with the identifier.

5. Apparatus, comprising
determining means (210) adapted to determine if the apparatus comprises an endpoint of an inbound service chain part of a service chain, wherein the inbound service chain part consists of at least a portion of one of an uplink service chain of the service chain and a downlink service chain of the service chain;
information monitoring means (220) adapted to monitor whether a received service data flow allocated to the service chain comprises a report information reporting that a packet was dropped, wherein the received service data flow is received from a precedent entity of the inbound service chain part;
excising means (230) adapted to excise the report information out of the received service data flow;
generating means (240) adapted to generate, if the apparatus comprises the endpoint and if the received service data flow comprises the report information, a message based on the received service data flow from which the report information is excised, wherein the message is to be sent to an entity outside of the service chain.

6. The apparatus according to claim 5, further comprising
instructing means adapted to instruct, if the apparatus comprises the endpoint and if the received service data flow comprises the report information, a service classifier of the service chain to insert the report information into an outbound service data flow to be sent to a subsequent entity of an outbound service chain part of the service chain, wherein the outbound service chain part consists of at least a portion of the one of the uplink service chain and the downlink service chain of the service chain different from that of which the inbound service chain part consists, and the service classifier is adapted to classify a received message for the outbound service chain part of the service chain.

7. The apparatus according to any of claims 5 to 6, further comprising
flow generating means adapted to generate the outbound service data flow based on the report information.

8. The apparatus according to claim 7, wherein
the flow generating means is adapted to generate the outbound service data flow based on the report information and the received message classified by the service classifier for the outbound service chain part.

9. The apparatus according to claim 8, further comprising
time supervising means adapted to supervise whether the outbound service data flow based on the received message and the report information was generated within a determined time; and
triggering means adapted to trigger the flow generating means to generate the outbound service data flow based on the report information and not based on the received message if the outbound service data flow based on the received message and the report information was not generated within the determined time.

10. The apparatus according to any of claims 6 to 9, further comprising
usage monitoring means adapted to monitor whether the report information is marked as used;
inhibiting means adapted to inhibit the apparatus from instructing the service classifier to insert the report information into the outbound service data flow if the report information is marked as used.

11. Method, comprising
generating a report information based on a dropping of a packet of a first received service data flow occurring in processing the first received service data flow, wherein the first received service data flow is allocated to a service chain and received from a precedent entity in the service chain; and
generating an outbound service data flow including the report information to be sent to a subsequent entity in the service chain.

12. Method, comprising determining if an apparatus performing the method comprises an endpoint of an inbound service chain part of a service chain, wherein the inbound service chain part consists of at least a portion of one of an uplink service chain of the service chain and a downlink service chain of the service chain;
monitoring whether a received service data flow allocated to the service chain comprises a report information reporting that a packet was dropped, wherein the received service data flow is received from a precedent entity of the inbound service chain part;
excising the report information out of the received service data flow;
generating, if the apparatus comprises the endpoint and if the received service data flow comprises the report information, a message based on the received service data flow from which the report information is excised, wherein the message is to be sent to an entity outside of the service chain.

13. A computer program product comprising a set of instructions which, when executed on an apparatus, is configured to cause the apparatus to carry out the method according to any one of claims 11 to 12.

## Patentansprüche

1. Vorrichtung, umfassend
ein Informationserzeugungsmittel (10), das dazu angepasst ist, eine Meldeinformation basierend auf einem Verlorengehen eines Pakets eines ersten empfangenen Dienstdatenflusses, das beim Verarbeiten des ersten empfangenen Dienstdatenflusses auftritt, zu erzeugen, wobei der erste empfangene Dienstdatenfluss einer Dienstkette zugeordnet und von einer vorhergehenden Einheit in der Dienstkette empfangen wird; und
ein Flusserzeugungsmittel, das dazu angepasst ist, einen ausgehenden Dienstdatenfluss einschließlich der an eine nachfolgende Einheit in der Dienstkette zu sendenden Meldeinformation zu erzeugen.

2. Vorrichtung nach Anspruch 1, wobei
das Flusserzeugungsmittel dazu angepasst ist, den ausgehenden Dienstdatenfluss basierend auf dem ersten empfangenen Dienstdatenfluss und der Meldeinformation zu erzeugen.

3. Vorrichtung nach Anspruch 2, ferner umfassend
ein Zeitüberwachungsmittel, das zum Überwachen angepasst ist, ob innerhalb einer bestimmten Zeit der ausgehende Dienstdatenfluss basierend auf dem ersten empfangenen Datenfluss und der Meldeinformation erzeugt wurde; und
ein Auslösemittel, das dazu angepasst ist, das Flusserzeugungsmittel auszulösen, um den ausgehenden Dienstdatenfluss basierend auf der Meldeinformation und nicht basierend auf dem ersten empfangenen Datenfluss zu erzeugen, wenn der ausgehende Dienstdatenfluss basierend auf dem ersten empfangenen Datenfluss und der Meldeinformation nicht innerhalb einer bestimmten Zeit erzeugt wurde.

4. Vorrichtung nach einem der Ansprüche 1 bis 3, ferner umfassend
ein Markierungsmittel, das dazu angepasst ist, die Meldeinformation mit einer Kennung der Vorrichtung zu markieren;
ein Prüfmittel, das dazu angepasst ist, zu überprüfen, ob ein zweiter empfangener Dienstdatenfluss die mit der Kennung markierte Meldeinformation umfasst, wobei der zweite empfangene Dienstdatenfluss von der vorhergehenden Einheit in der Dienstkette empfangen wird;
ein Entfernungsmittel, das dazu angepasst ist, die Meldeinformation aus dem zweiten empfangenen Dienstdatenfluss zu entfernen, wenn der zweite empfangene Dienstdatenfluss die mit der Kennung markierte Meldeinformation umfasst.

5. Vorrichtung, umfassend
ein Bestimmungsmittel (210), das dazu angepasst ist, zu bestimmen, ob die Vorrichtung einen Endpunkt eines eingehenden Dienstkettenteils einer Dienstkette umfasst, wobei der eingehende Dienstkettenteil aus mindestens einem Abschnitt aus einer Aufwärtsstreckendienstkette der Dienstkette und einer Abwärtsstreckendienstkette der Dienstkette besteht;
ein Informationsüberwachungsmittel (220), das dazu angepasst ist, zu überwachen, ob ein der Dienstkette zugeordneter empfangener Dienstdatenfluss eine Meldeinformation umfasst, die meldet, dass ein Paket verloren gegangen ist, wobei der empfangene Dienstdatenfluss von einer vorhergehenden Einheit des eingehenden Dienstkettenteils empfangen wird;
ein Ausschneidemittel (230), das dazu angepasst ist, die Meldeinformation aus dem empfangenen Dienstdatenfluss auszuschneiden;
ein Erzeugungsmittel (240), das dazu angepasst ist, wenn die Vorrichtung den Endpunkt umfasst und wenn der empfangene Dienstdatenfluss die Meldeinformation umfasst, eine Nachricht basierend auf dem empfangenen Dienstdatenfluss, aus dem die Meldeinformation herausgeschnitten werden, zu erzeugen, wobei die Nachricht an eine Einheit außerhalb der Dienstkette zu senden ist.

6. Vorrichtung nach Anspruch 5, ferner umfassend
ein Anweisungsmittel, das dazu angepasst ist, wenn die Vorrichtung den Endpunkt umfasst und wenn der empfangene Dienstdatenfluss die Meldeinformation umfasst, einen Dienstklassifikator der Dienstkette anzuweisen, die Meldeinformation in einen ausgehenden Dienstdatenfluss einzufügen, der an eine nachfolgende Einheit eines ausgehenden Dienstkettenteils der Dienstkette zu senden ist, wobei der ausgehende Dienstkettenteil aus mindestens einem Abschnitt aus einem der Aufwärtsstreckendienstkette und der Abwärtsstreckendienstkette der Dienstkette besteht, der sich von dem unterscheidet, aus dem der eingehende Dienstkettenteil besteht, und der Dienstklassifikator dazu angepasst ist, eine empfangene Nachricht für den ausgehenden Dienstkettenteil der Dienstkette zu klassifizieren.

7. Vorrichtung nach einem der Ansprüche 5 bis 6, ferner umfassend ein Flusserzeugungsmittel, das dazu angepasst ist, den ausgehenden Dienstdatenfluss basierend auf der Meldeinformation zu erzeugen.

8. Vorrichtung nach Anspruch 7, wobei
das Flusserzeugungsmittel dazu angepasst ist, den ausgehenden Dienstdatenfluss basierend auf der Meldeinformation und der empfangenen Nachricht zu erzeugen, die vom Dienstklassifikator für den ausgehenden Dienstkettenteil klassifiziert wurden.

9. Vorrichtung nach Anspruch 8, ferner umfassend
ein Zeitüberwachungsmittel, das zum Überwachen angepasst ist, ob der ausgehende Dienstdatenfluss basierend auf der empfangenen Nachricht und der Meldeinformation innerhalb einer bestimmten Zeit erzeugt wurde; und
ein Auslösemittel, das dazu angepasst ist, das Flusserzeugungsmittel auszulösen, um den ausgehenden Dienstdatenfluss basierend auf der Meldeinformation und nicht basierend auf der empfangenen Nachricht zu erzeugen, wenn der ausgehende Dienstdatenfluss basierend auf der empfangenen Nachricht und der Meldeinformation nicht innerhalb der bestimmten Zeit erzeugt wurde.

10. Vorrichtung nach einem der Ansprüche 6 bis 9, ferner umfassend
ein Verwendungsüberwachungsmittel, das dazu angepasst ist, zu überwachen, ob die Meldeinformation als verwendet markiert ist;
ein Verhinderungsmittel, das dazu angepasst ist, die Vorrichtung daran zu hindern, den Dienstklassifikator anzuweisen, die Meldeinformation in den ausgehenden Dienstdatenfluss einzufügen, wenn die Meldeinformation als verwendet markiert ist.

11. Verfahren, umfassend
Erzeugen einer Meldeinformation basierend auf einem Verlorengehen eines Pakets eines ersten empfangenen Dienstdatenflusses, das beim Verarbeiten des ersten empfangenen Dienstdatenflusses auftritt, wobei der erste empfangene Dienstdatenfluss einer Dienstkette zugeordnet und von einer vorhergehenden Einheit in der Dienstkette empfangen wird; und
Erzeugen eines ausgehenden Dienstdatenflusses einschließlich der an eine nachfolgende Einheit in der Dienstkette zu sendenden Meldeinformation.

12. Verfahren, umfassend
Bestimmen, ob eine das Verfahren ausführende Vorrichtung einen Endpunkt eines eingehenden Dienstkettenteils einer Dienstkette umfasst, wobei der eingehende Dienstkettenteil aus mindestens einem Abschnitt aus einer Aufwärtsstreckendienstkette der Dienstkette und einer Abwärtsstreckendienstkette der Dienstkette besteht;
Überwachen, ob ein der Dienstkette zugeordneter empfangener Dienstdatenfluss eine Meldeinformation umfasst, die meldet, dass ein Paket verloren gegangen ist, wobei der empfangene Dienstdatenfluss von einer vorhergehenden Einheit des eingehenden Dienstkettenteils empfangen wird;
Ausschneiden der Meldeinformation aus dem empfangenen Dienstdatenfluss;
Erzeugen, wenn die Vorrichtung den Endpunkt umfasst und wenn der empfangene Dienstdatenfluss die Meldeinformation umfasst, eine Nachricht basierend auf dem empfangenen Dienstdatenfluss, aus dem die Meldeinformation herausgeschnitten ist, wobei die Nachricht an eine Einheit außerhalb der Dienstkette zu senden ist.

13. Computerprogrammprodukt, das einen Satz von Anweisungen umfasst, die, wenn sie auf einer Vorrichtung ausgeführt werden, dazu eingerichtet sind, die Vorrichtung zu veranlassen, das Verfahren nach einem der Ansprüche 11 bis 12 auszuführen.

## Revendications

1. Appareil, comprenant un moyen générateur d'information (10) conçu pour générer une information de rapport basée sur une perte d'un paquet d'un premier flux de données de services reçu se produisant lors du traitement du premier flux de données de services reçu, dans lequel le premier flux de données de services reçu est alloué à une chaîne de services et est reçu en provenance d'une entité précédente dans la chaîne de services ; et
un moyen générateur de flux conçu pour générer un flux de données de services sortant comprenant l'information de rapport à envoyer à une entité suivante dans la chaîne de services.

2. Appareil selon la revendication 1, dans lequel le moyen générateur de flux est conçu pour générer le flux de données de services sortant sur la base du premier flux de données de services reçu et de l'information de rapport.

3. Appareil selon la revendication 2, comprenant en outre
un moyen de supervision du temps conçu pour superviser si le flux de données de services sortant a été généré sur la base du premier flux de données reçu et de l'information de rapport en un temps déterminé ; et
un moyen de déclenchement conçu pour déclencher le moyen générateur de flux afin de générer le flux de données de services sortant sur la base de l'information de rapport et non sur la base du premier flux de données reçu si le flux de données de services sortant n'at pas été généré sur la base du premier flux de données reçu et de l'information de rapport en un temps déterminé.

4. Appareil selon l'une quelconque des revendications 1 à 3, comprenant en outre
un moyen de marquage conçu pour marquer l'information de rapport avec un identificateur de l'appareil ;
un moyen de vérification conçu pour vérifier si un second flux de données de services reçu comprend l'information de rapport marquée par l'identificateur, dans lequel le second flux de données de services reçu est reçu en provenance de l'entité précédente dans la chaîne de services ;
un moyen de suppression conçu pour supprimer l'information de rapport du second flux de données de services reçu si le second flux de données de services reçu comprend l'information de rapport marquée avec l'identificateur.

5. Appareil, comprenant
un moyen de détermination (210) conçu pour déterminer si l'appareil comprend un point d'extrémité d'une partie de chaîne de services entrante d'une chaîne de services, dans lequel la partie de chaîne de services entrante consiste en au moins une partie de l'une d'une chaîne de services de liaison montante de la chaîne de services et d'une chaîne de services de liaison descendante de la chaîne de services ;
un moyen de surveillance d'informations (220) conçu pour surveiller si un flux de données de services reçu alloué à la chaîne de services comprend une information de rapport signalant qu'un paquet a été perdu, dans lequel le flux de données de services reçu est reçu en provenance d'une entité précédente de la partie de chaîne de services entrante ;
un moyen d'élimination (230) conçu pour éliminer l'information de rapport du flux de données de services reçu ;
un moyen générateur (240) conçu, si l'appareil comprend le point d'extrémité et si le flux de données de services reçu comprend l'information de rapport, pour générer un message basé sur le flux de données de services reçu duquel l'information de rapport est éliminée, dans lequel le message doit être envoyé à une entité extérieure à la chaîne de services.

6. Appareil selon la revendication 5, comprenant en outre
un moyen d'instruction conçu, si l'appareil comprend le point d'extrémité et si le flux de données de services reçu comprend l'information de rapport, pour envoyer à un classificateur de services de la chaîne de services l'instruction d'insérer l'information de rapport dans un flux de données de services sortant devant être envoyé à une entité suivante d'une partie de chaîne de services sortante de la chaîne de services, dans lequel la partie de chaîne de services sortante consiste en au moins une partie de ladite une de la chaîne de services de liaison montante et de la chaîne de services de liaison descendante de la chaîne de services qui est différente de celle dont consiste la partie de chaîne de services entrante, et le classificateur de services est conçu pour classer un message reçu pour la partie de chaîne de services sortante de la chaîne de services.

7. Appareil selon l'une quelconque des revendications 5 à 6, comprenant en outre
un moyen générateur de flux conçu pour générer le flux de données de services sortant sur la base de l'information de rapport.

8. Appareil selon la revendication 7, dans lequel
le moyen générateur de flux est conçu pour générer le flux de données de services sortant sur la base de l'information de rapport et du message reçu classé par le classificateur de services pour la partie de chaîne de services sortante.

9. Appareil selon la revendication 8, comprenant en outre
un moyen de supervision du temps conçu pour superviser si le flux de données de services sortant basé sur le message reçu et l'information de rapport a été généré en un temps déterminé ; et
un moyen de déclenchement conçu pour déclencher le moyen générateur de flux pour générer le flux de données de services sortant sur la base de l'information de rapport et non sur la base du message reçu si le flux de données de services sortant basé sur le message reçu et l'information de rapport n'a pas été généré en le temps déterminé.

10. Appareil selon l'une quelconque des revendications 6 à 9, comprenant en outre
un moyen de surveillance d'utilisation conçu pour surveiller si l'information de rapport est marquée comme étant utilisée ;
un moyen inhibiteur conçu pour empêcher l'appareil d'ordonner au classificateur de services d'insérer l'information de rapport dans le flux de données de services sortant si l'information de rapport est marquée comme étant utilisée.

11. Procédé, comprenant
la génération d'une information de rapport basée sur la perte d'un paquet d'un premier flux de données de services reçu se produisant lors du traitement du premier flux de données de services reçu, dans lequel le premier flux de données de services reçu est alloué à une chaîne de services et est reçu en provenance d'une entité précédente dans la chaîne de services ; et
la génération d'un flux de données de services sortant comprenant l'information de rapport à envoyer à une entité suivante dans la chaîne de services.

12. Procédé, comprenant
la détermination du fait de savoir si un appareil mettant en oeuvre le procédé comprend un point d'extrémité d'une partie de chaîne de services entrante d'une chaîne de services, dans lequel la partie de chaîne de services entrante consiste en au moins une partie de l'une d'une chaîne de services de liaison montante de la chaîne de services et d'une chaîne de services de liaison descendante de la chaîne de services ;
la surveillance du fait de savoir si un flux de données de services reçu alloué à la chaîne de services comprend une information de rapport signalant qu'un paquet a été perdu, dans lequel le flux de données de services reçu est reçu en provenance d'une entité précédente de la partie de chaîne de services entrante ;
l'élimination de l'information de rapport du flux de données de services reçu ;
la génération, si l'appareil comprend le point d'extrémité et si le flux de données de services reçu comprend l'information de rapport, d'un message basé sur le flux de données de services reçu duquel l'information de rapport est éliminée, dans lequel le message doit être envoyé à une entité extérieure à la chaîne de services.

13. Produit de programme informatique comprenant un jeu d'instructions qui, lorsqu'il est exécuté sur un appareil, est configuré pour amener l'appareil à mettre en oeuvre le procédé selon l'une quelconque des revendications 11 à 12.
